(19) Europäisches Patentamt
European Patent Office
Office européen des brevets

(11) **EP 4 529 997 A1**

(12) **EUROPEAN PATENT APPLICATION**
published in accordance with Art. 153(4) EPC

(43) Date of publication:
**02.04.2025  Bulletin 2025/14**

(21) Application number: **23811637.0**

(22) Date of filing: **11.05.2023**

(51) International Patent Classification (IPC):
**B22C 1/00** (2006.01)      **B22C 9/02** (2006.01)

(52) Cooperative Patent Classification (CPC):
**B22C 1/00; B22C 1/10; B22C 1/18; B22C 1/20; B22C 9/02;** Y02P 10/20

(86) International application number:
**PCT/JP2023/017720**

(87) International publication number:
**WO 2023/228762 (30.11.2023 Gazette 2023/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.05.2022  JP 2022084171**

(71) Applicant: **Kao Corporation**
**Tokyo 103-8210 (JP)**

(72) Inventor: **IKENAGA, Haruki**
**Toyohashi-shi, Aichi 441-8074 (JP)**

(74) Representative: **Hoffmann Eitle**
**Patent- und Rechtsanwälte PartmbB**
**Arabellastraße 30**
**81925 München (DE)**

(54) **STRUCTURE FOR PRODUCING CASTING, METHOD FOR PRODUCING SAME, AND METHOD FOR PRODUCING CASTING USING SAME**

(57)      A structure (3) for producing a casting includes a main body (31) and a surface layer (32) covering the inner surface of the main body (31). The main body (31) contains an inorganic component at 45% by mass or more and 80% by mass or less, and the inorganic component contains at least one element selected from aluminum and zirconium. The surface layer (32) contains an inorganic component at 80% by mass or more, and the inorganic component contains at least one element selected from aluminum and zirconium. The inorganic component contained in the main body (31) and the inorganic component contained in the surface layer (32) satisfy a certain relationship.

Fig. 4

EP 4 529 997 A1

## Description

Technical Field

The present invention relates to a structure for producing a casting, a method for producing the structure, and a casting production method using the structure.

Background Art

The present applicants have disclosed a structure for producing a casting. The structure includes a main body containing organic fibers, inorganic fibers, inorganic particles, and a binder and includes a surface layer formed on the inner surface of the main body (see Patent Literature 1). With the structure according to the literature, the surface layer blocks pyrolysis gas generated from organic substances contained in the main body during casting, and the structure advantageously reduces gas defects of a casting as compared to conventional structures.

Citation List

Patent Literatures

Patent Literature 1: US2013/0105103A1

Summary of Invention

The present invention relates to a structure for producing a casting, and the structure includes a main body and a surface layer covering the inner surface of the main body.

In an embodiment, the main body preferably contains organic fibers, inorganic fibers, inorganic particles, and a binder.

In an embodiment, the main body preferably contains an inorganic component at 45% by mass or more and 80% by mass or less.

In an embodiment, the inorganic component contained in the main body preferably contains at least one element selected from aluminum and zirconium, and the inorganic component preferably contains aluminum and zirconium at 25% by mass or more in total in terms of oxide thereof.

In an embodiment, the surface layer preferably contains an inorganic component at 80% by mass or more.

In an embodiment, the inorganic component contained in the surface layer preferably contains at least one element selected from aluminum and zirconium, and the inorganic component preferably contains aluminum and zirconium at 30% by mass or more in total in terms of oxide thereof.

In an embodiment, the inorganic component contained in the main body and the inorganic component contained in the surface layer preferably satisfy the relationship of Formula (1):

$$(0.375x - 7.5) < y < (0.375x + 71) \quad (1)$$

(wherein, x is $A1/(A1 + Z1) \times 100$; A1 is the mass of aluminum in the inorganic component contained in the main body in terms of oxide; Z1 is the mass of zirconium in the inorganic component contained in the main body in terms of oxide; y is $A2/(A2 + Z2) \times 100$; A2 is the mass of aluminum in the inorganic component contained in the surface layer in terms of oxide; and Z2 is the mass of zirconium in the inorganic component contained in the surface layer in terms of oxide).

The present invention also relates to a method for producing a casting including using the structure for producing a casting to cast a molten metal.

The present invention further relates to a method for producing a structure for producing a casting. The method includes supplying a material slurry into a papermaking mold including split molds and having an inner surface covered with a papermaking net, to deposit the material slurry on the papermaking net to prepare a water-containing main body;

drying the water-containing main body; and
forming a surface layer on the inner surface of the dried main body.

In an embodiment, the main body preferably contains an inorganic component, and a component containing at least one element selected from aluminum and zirconium is preferably used as the inorganic component contained in the main body.

In an embodiment, the surface layer preferably contains an inorganic component, and a component containing at least one element selected from aluminum and zirconium is preferably used as the inorganic component contained in the surface layer.

In an embodiment, the inorganic component contained in the main body and the inorganic component contained in the surface layer preferably satisfy a relationship of Formula (1):

$$(0.375x - 7.5) < y < (0.375x + 71) \quad (1)$$

(wherein, x is A1/(A1 + Z1) $\times$ 100; A1 is the mass of aluminum in the inorganic component contained in the main body in terms of oxide; Z1 is the mass of zirconium in the inorganic component contained in the main body in terms of oxide; y is A2/(A2 + Z2) $\times$ 100; A2 is the mass of aluminum in the inorganic component contained in the surface layer in terms of oxide; and Z2 is the mass of zirconium in the inorganic component contained in the surface layer in terms of oxide).

Brief Description of Drawings

[Fig. 1] Fig. 1 is a schematic sectional view showing an embodiment of the structure for producing a casting of the present invention.

[Fig. 2] Fig. 2(a) to Fig. 2(d) are schematic sectional views showing other embodiments of the structure for producing a casting of the present invention.

[Fig. 3] Figs. 3(a) and (b) are views illustrating a method for determining the peelability of each structure for producing a casting produced in Examples and Comparative Examples.

[Fig. 4] Fig. 4 is a graph showing the relationship between inorganic components contained in the main body and inorganic components contained in the surface layer of each structure for producing a casting produced in Examples and Comparative Examples.

Description of Embodiments

The structure having the surface layer disclosed in Patent Literature 1 can reduce gas defects of a casting as described above. However, when a high-temperature molten metal such as molten steel is cast into a structure in which the main body insufficiently adheres to the surface layer, the surface layer may be peeled. The peeled surface layer may be mixed in the molten metal to cause inclusion defects, or gas may come into contact with the molten metal through a portion where the surface layer is peeled. For the structure disclosed in the literature, the adhesion between the main body and the surface layer has been briefly studied, but as recent castings have higher quality, a further improvement in the adhesion between a main body and a surface layer is required.

The present invention therefore relates to a structure for producing a casting in which the adhesion between the main body and the surface layer is improved.

The present invention will now be described on the basis of preferred embodiments thereof with reference to drawings.

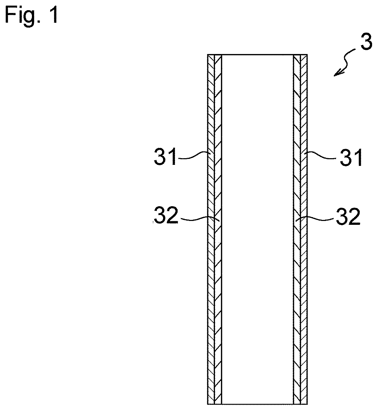

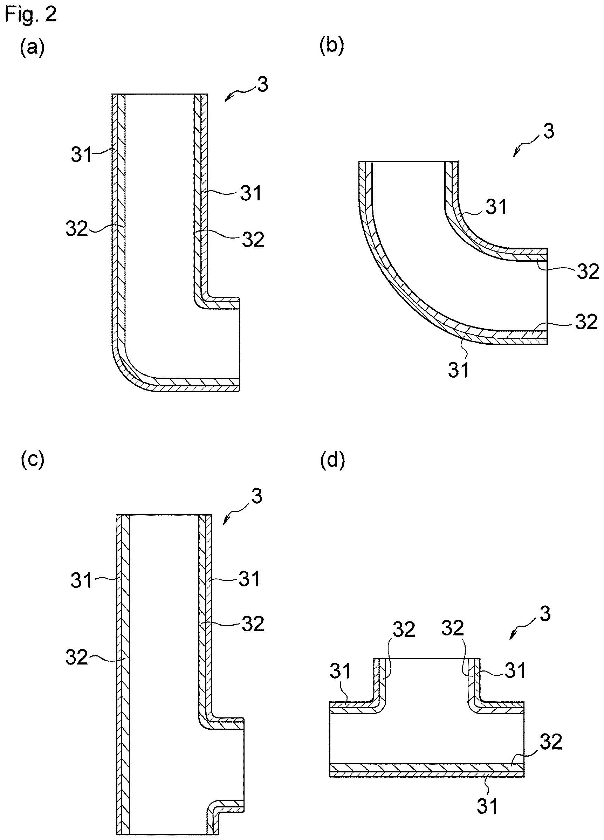

Fig. 1 shows a structure for producing a casting (hereinafter also simply called "structure") 3 as a preferred embodiment of the present invention. The structure 3 is tubular as shown in Fig. 1. In the description, "tubular" includes a shape partially having a bend portion in the axis direction as shown in Fig. 2(a), a shape curved into an arc in the entire axis direction as shown in Fig. 2(b), a shape having a branched portion as shown in Figs. 2(c) and (d), and other similar shapes.

The structure 3 includes a main body 31 and a surface layer 32 covering at least a part of the main body 31 as shown in Fig. 1 and Figs. 2(a) to (d). The entire main body 31 is integrally formed and has no joint. The entire surface layer 32 is integrally formed and has no joint. The main body 31 may have a single layer or multilayers. The surface layer 32 may have a single layer or multilayers. In Fig. 1 and Figs. 2(a) to (d), each of the main body 31 and the surface layer 32 has a single layer.

In the structure 3, the surface layer 32 is preferably formed on at least the surface of the main body 31 to come into contact with a molten metal when the structure is used. In particular, from the viewpoint of improving gas defects of a casting, the surface layer 32 is preferably on the side to come into contact with a molten metal. Preferably 50% or more, more preferably 80% or more, even more preferably 90% or more, and further preferably substantially 100% of the area of the surface of the main body 31 to come into contact with a molten metal is covered with the surface layer 32.

The main body 31 contains organic fibers, inorganic fibers, inorganic particles (hereinafter also called "first inorganic particles"), and a binder (hereinafter also called a "first binder"). Such a main body 31 may be formed, for example, by the following method: a slurry composition (hereinafter also called a "material slurry") containing organic fibers, inorganic fibers, first inorganic particles, a first binder, and a dispersion medium is prepared to form an intermediate of the main body 31 by papermaking with a mold for papermaking-dehydration molding; and the intermediate is next heated and dried with the mold. The method is not limited thereto. Hereinafter, components contained in the main body 31 will be described.

(i) Organic fibers

Organic fibers are a fibrous substance that forms the skeleton of the main body 31 before use in casting. During casting, some or all of the fibers are burned by heat of a molten metal to form cavities in the main body 31 after a casting is produced.

The organic fibers may include paper fibers such as wood pulp, fibrillated synthetic fibers, and regenerated fibers (such as rayon fibers), and a single type or a mixture of two or more types of the fibers may be used. Of them, paper fibers are preferably contained. The reason is that paper fibers can be subjected to papermaking into various shapes, a dehydrated and dried molded article has excellent wet strength characteristics, and paper fibers are easily and stably available and are inexpensive. Paper fibers may include, in addition to wood pulp, cotton pulp, linter pulp, and non-wood pulp such as bamboo pulp and straw pulp. As the wood pulp, virgin pulp or waste paper pulp (recycled pulp) may be used singly or as a mixture of two or more of them. From the viewpoint of easy availability, environmental protection, production cost, or the like, the organic fibers preferably contain waste paper pulp. The organic fibers preferably contain waste paper (such as newspaper) from the viewpoint of improving the moldability of the structure and of supplying stability and economic efficiency.

The organic fibers preferably have an average fiber length of 0.6 mm or more and more preferably 0.7 mm or more. Using organic fibers having an average fiber length not less than the lower limit prevents the surface of the main body 31 from cracking and provides mechanical properties such as impact strength.

The organic fibers preferably have an average fiber length of 10 mm or less, more preferably 7 mm or less, even more preferably 5 mm or less, and further preferably 3 mm or less. When organic fibers having an average fiber length not more than the upper limit are used, the main body 31 is unlikely to have uneven wall thicknesses and has good surface smoothness.

From the viewpoint of improving the toughness of the structure 3 and of improving the usability, the main body 31 preferably contains the organic fibers at 2% by mass or more and 30% by mass or less relative to the total mass of the main body, more preferably 3% by mass or more and 26% by mass or less, even more preferably 5% by mass or more and 20% by mass or less, and further preferably 10% by mass or more and 20% by mass or less. Usability means that a structure is unlikely to be cracked by the force applied when the structure is cut into an intended size before use and that a structure is unlikely to be broken by the sand weight during casting.

(ii) Inorganic fibers

Inorganic fibers are a fibrous substance that mainly forms the skeleton of the structure before use in casting and is not burned by heat of a molten metal during casting to maintain the shape. In particular, when an organic binder is used as the first binder described later, the inorganic fibers can suppress thermal shrinkage due to pyrolysis of the organic binder by heat of a molten metal.

The inorganic fibers may, for example, include carbon fibers, artificial mineral fibers such as rock wool, ceramic fibers, glass fibers, and natural mineral fibers, and a single type or a mixture of two or more types of the fibers may be used. Of them, carbon fibers having high strength even at such a high temperature that metal melts are preferably contained from the viewpoint of suppressing the thermal shrinkage. To suppress the production cost, rock wool or glass fibers are preferably contained.

The inorganic fibers preferably have an average fiber length of 0.1 mm or more, more preferably 0.25 mm or more, even more preferably 0.4 mm or more, and further preferably 0.5 mm or more. When inorganic fibers having an average fiber length not less than the lower limit are used, the main body 31 is prevented from thermally shrinking during casting. In addition, a main body 31 having a large wall thickness (specifically a hollow three-dimensional article such as a bottle) is produced with good papermaking properties.

The inorganic fibers preferably have an average fiber length of 10 mm or less, more preferably 8 mm or less, and even more preferably 4 mm or less. When inorganic fibers having an average fiber length not more than the upper limit are used, the produced main body 31 has a uniform wall thickness, and a hollow structure is easily produced.

The main body 31 preferably contains the inorganic fibers at 0.5% by mass or more and 40% by mass or less relative to the total mass of the main body 31, more preferably 1% by mass or more and 35% by mass or less, even more preferably 2% by mass or more and 20% by mass or less, further preferably 2% by mass or more and 15% by mass or less, and furthermore preferably 2% by mass or more and 12% by mass or less. When the inorganic fibers are contained at a content not less than the lower limit, the main body 31 has a sufficient strength during casting, and the effect is markedly achieved specifically for a main body 31 containing an organic binder. In addition, this can prevent shrinkage or cracks of the main body 31, peeling of the wall (phenomenon in which the wall of the main body 31 separates into an inner layer and an outer layer), or other defects, which are caused by carbonization of the organic binder. Moreover, this is likely to prevent a part of the main body 31 or molding sand from mixing into a product (casting) to cause defects. When the inorganic fibers are contained at a content not more than the upper limit, the moldability of the main body 31 is improved especially in a papermaking step or a dehydration step, and this suppresses a variation in material cost depending on the used fibers.

The mass ratio of the inorganic fibers to the organic fibers (inorganic fibers/organic fibers) is preferably 0.1 or more, more preferably 0.15 or more, and even more preferably 0.18 or more when the inorganic fibers are carbon fibers. The ratio is preferably 50 or less, more preferably 30 or less, even more preferably 1 or less, further preferably 0.8 or less, and furthermore preferably 0.7 or less.

When the inorganic fibers are rock wool or glass fibers, the ratio of inorganic fibers/organic fibers is preferably 0.5 or more and more preferably 0.9 or more. The ratio is preferably 3 or less and more preferably 2 or less.

When such a mass ratio is not more than the upper limit of the range, the moldability is good during papermaking or dehydration molding of the structure. Accordingly, the structure after dehydration has sufficient strength, which prevents the structure from cracking when the structure is taken out of a papermaking mold. When such a mass ratio is not less than the lower limit of the range, the structure is prevented from shrinking due to pyrolysis of the organic fibers or the organic binder described later.

For a main body 31 containing a mixture of two or more types of organic fibers, the mass of the organic fibers in the mass ratio is the total mass of the organic fibers contained in the main body 31. For a main body 31 containing a mixture of two or more types of inorganic fibers, the mass of the inorganic fibers in the mass ratio is the total mass of the inorganic fibers contained in the main body 31.

To increase the hot strength of the structure for producing a casting and to increase the moldability of the structure for producing a casting, the inorganic fibers more preferably have an average fiber length/fiber width ratio (hereinafter also called "major axis/minor axis ratio") of 10 or more and 2,000 or less, even more preferably 50 or more and 1,000 or less, further preferably 65 or more and 800 or less, and furthermore preferably 65 or more and 600 or less.

(iii) First inorganic particles

As the first inorganic particles, aggregate particles of a refractory such as mullite, zircon, mica, silica, hollow ceramic, fly ash, alumina, zirconia, and graphite may be contained. The first inorganic particles may include a single type or a mixture of two or more types of these aggregate particles. The hollow ceramic is hollow particles contained in fly ash and may be prepared by float-sorting fly ash with water. Of them, from the viewpoint of suppressing peeling of the surface layer from the main body, at least one selected from mullite, zircon, hollow ceramic, alumina, and zirconia is preferably contained; at least one selected from mullite, zircon, and alumina is more preferably contained; and at least one selected from mullite and zircon is even more preferably contained.

In the main body 31, the first inorganic particles preferably have an average particle diameter within a particular range.

Specifically, the first inorganic particles preferably have an average particle diameter of 1 $\mu$m or more and 50 $\mu$m or less, more preferably 3 $\mu$m or more and 45 $\mu$m or less, and even more preferably 5 $\mu$m or more and 35 $\mu$m or less. When first inorganic particles having an average particle diameter not more than the upper limit are used, the main body 31 contains the first inorganic particles at a higher density, and the main body 31 has a higher strength. In addition, the main body 31 has a lower surface roughness, and the inner surface of the main body 31 can be uniformly coated with the coating liquid composition described later. Specifically, a surface layer 32 formed by coating the inner surface of the main body with the coating liquid composition described later can be prevented from having an excessively thin portion. When first inorganic particles having an average particle diameter not less than the lower limit are used, the first inorganic particles are be prevented from passing through a papermaking net during preparation of an intermediate of the main body 31 by papermaking, and a reduction in yield can be suppressed. Accordingly, the moldability of the main body 31 can be improved. In addition, an intermediate of the main body 31 can have higher water filtration properties, and dehydration or drying can be easily performed to improve the moldability of the main body 31.

The average particle diameter of first inorganic particles may be determined by the following method.

[Determination method of average particle diameter]

A laser diffraction particle size analyzer (manufactured by Horiba, Ltd., LA-920) is used to determine the average particle diameter at a cumulative volume of 50% as the average particle diameter in the specification of the present application. The analysis conditions are as follows:

· Measurement method: flow method

· Refractive index: varying with the inorganic particles (see the manual of LA-920)
· Dispersion medium: a medium appropriate for the inorganic particles
· Dispersion method: ultrasonic agitation with an equipped device (22.5 kHz)

The first inorganic particles preferably have a specific gravity of 0.5 or more and 7 or less from the viewpoint of material dispersibility. From the viewpoint of weight reduction, the specific gravity is more preferably 1 or more and 6 or less, even more preferably 1.5 or more and 5 or less, and further preferably 2 or more and 5 or less. When first inorganic particles having a specific gravity within the above range are used, the material dispersibility is improved in a papermaking step with water as the dispersion medium. The formulation of the main body 31 may be determined in consideration of the apparent specific gravity as well as the volume specific gravity of the first inorganic particles. The volume specific gravity is determined as follows: particles are placed in a container with a certain volume in certain conditions; the amount of the particles in the container is determined; and the mass per unit volume is calculated.

The main body 31 preferably contains first inorganic particles having a melting point of 1,200°C or more. Even when a high-temperature molten metal such as molten steel is cast into a structure 3 having such a main body, the main body 31 is prevented from deforming, and the adhesion between the main body and the surface layer can be maintained. This suppresses peeling of the surface layer to reduce inclusion defects and gas defects. From the viewpoint of more markedly achieving the advantage, the first inorganic particles contained in the main body 31 preferably have a melting point of 1,400°C or more and more preferably 1,600°C or more.

Examples of the first inorganic particles satisfying the above requirements include mullite, zircon, and alumina particles.

The upper limit of the melting point of the first inorganic particles is not specifically limited but is, for example, 3,000°C.

The first inorganic particles may be hollow particles. Using hollow particles can reduce the volume specific gravity of inorganic particles having a large specific gravity.

From the viewpoint of improving the hot strength, the main body 31 preferably contains the first inorganic particles at a content of 40% by mass or more relative to the total mass of the main body, more preferably 45% by mass or more, and even more preferably 50% by mass or more.

From the viewpoint of improving the hot strength, the main body 31 preferably contains the first inorganic particles at a content of 80% by mass or less relative to the total mass of the main body, more preferably 75% by mass or less, even more preferably 70% by mass or less, further preferably 65% by mass or less, and furthermore preferably 60% by mass or less.

From the same reason as above, the main body 31 contains an inorganic component at 45% by mass or more and 80% by mass or less, preferably 47% by mass or more and 75% by mass or less, more preferably 48% by mass or more and 72% by mass or less, and even more preferably 50% by mass or more and 70% by mass or less.

From the viewpoint of improving the adhesion to the surface layer 32 described later, the inorganic component contained in the main body 31 contains at least one element selected from aluminum and zirconium. The inorganic component contains aluminum and zirconium at 25% by mass or more in total in terms of oxide thereof, preferably 30% by mass or more, more preferably 40% by mass or more, even more preferably 50% by mass or more, further preferably 55% by mass or more, furthermore preferably 60% by mass or more, and even further preferably 63% by mass or more. The upper limit is not specifically limited but may be, for example, 99% by mass.

In the specification of the present application, the "inorganic component contained in a main body" means the total mass of inorganic substances including inorganic fibers and first inorganic particles. The content of an inorganic component is calculated from the ignition loss determined by <Content measurement of inorganic component> described later. In a structure 3 containing, for example, only carbon fibers as the inorganic fibers, the inorganic component is a component mainly derived from first inorganic particles.

(iv) First binder

The main body 31 in the structure 3 of the present invention may contain, as a first binder, for example, at least one of an organic binder and an inorganic binder. From the viewpoint of excellent removability after casting, the main body 31 preferably contains an organic binder. Examples of the organic binder include thermosetting resins such as a phenol resin, an epoxy resin, and a furan resin. The main body 31 may contain a single organic binder or a mixture of two or more organic binders. Of these organic binders, the main body 31 preferably contains a phenol resin from the viewpoint of generating combustible gas in a small amount, having combustion inhibition effect, and having a high residual carbon rate after pyrolysis (carbonization).

Examples of the phenol resin include a novolac phenol resin, a resol phenol resin, and a modified phenol resin modified with urea, melamine, epoxy, or the like. When the main body 31 specifically contains a resol phenol resin, odors during molding the main body 31 or casting defects when the main body 31 is used as a mold can be reduced without any curing agent such as an acid or an amine, and thus such a resin is preferably contained.

For a main body 31 containing a novolac phenol resin, a curing agent is preferably used in combination. The curing agent is easily dissolved in water and thus is preferably applied to the surface of the main body 31 after dehydration. The curing agent preferably contains, for example, hexamethylenetetramine.

As the inorganic binder, for example, a phosphoric acid binder, a water glass such as a silicate, gypsum, a sulfate, a silica binder, or a silicone binder may be contained. The main body 31 may contain a single inorganic binder or a mixture of two or more inorganic binders. Alternatively, the main body 31 may contain the organic binder and the inorganic binder in combination.

From the viewpoint of firmly binding organic fibers, inorganic fibers, and first inorganic particles when a papermaking product is subjected to dry molding before casting, the first binder preferably has a weight loss rate (by TG thermal analysis) of 50% by mass or less and more preferably 45% by mass or less at 1,000°C in a nitrogen atmosphere.

The main body 31 preferably contains the first binder at 2% by mass or more and 40% by mass or less relative to the total mass of the main body, more preferably 5% by mass or more and 30% by mass or less, and even more preferably 10% by mass or more and 20% by mass or less. When the first binder is contained at a content not less than the lower limit, the main body 31 has a higher strength and a higher heat resistance. When the first binder is contained at a content not more than the upper limit, gas generation is suppressed, and stickiness during molding is suppressed. **In** addition, a reduction in the content of skeletal components is suppressed, and the shape retention properties are improved. When a first binder specifically including an organic binder is contained at a content within the above range, the effect of improving the heat resistance is more markedly achieved.

(v) Other components

The main body 31 may contain a paper strength enhancer in addition to the organic fibers, the inorganic fibers, the first inorganic particles, and the first binder. The paper strength enhancer functions to prevent an intermediate of the main body 31 from swelling when the intermediate is infiltrated with the first binder (described later).

Examples of the paper strength enhancer include latex, an acrylic emulsion, polyvinyl alcohol, carboxymethyl cellulose (CMC), a polyacrylamide resin, and a polyamide epichlorohydrin resin.

The content of the paper strength enhancer as a solid content is preferably 0.01% by mass or more and 2% by mass or less and more preferably 0.02% by mass or more and 1% by mass or less relative to the total mass of the main body 31. When the paper strength enhancer is used in an amount of 0.01% by mass or more, the swelling prevention is sufficiently achieved, and the added first inorganic particles are appropriately fixed to fibers. When the paper strength enhancer is used in an amount of 2% by mass or less, a molded article of the main body 31 is unlikely to adhere to a mold.

The main body 31 may further contain components such as a flocculant, a colorant, and an antiseptic. The above-described polyamide epichlorohydrin resin is also used as the flocculant.

The main body 31 may have a thickness according to an intended purpose or the like. The main body 31 may have a constant thickness in the circumferential direction of the main body 31 or have varying thicknesses. The main body 31 may have a constant thickness in the axis direction of the main body 31 or have varying thicknesses. For a main body 31 having varying thicknesses in the circumferential direction or the axis direction, the main body 31 may partly have a thick portion or a thin portion.

The main body 31 preferably has a thickness of 0.2 mm or more, more preferably 0.4 mm or more, even more preferably 0.5 mm or more, further preferably 0.6 mm or more, furthermore preferably 0.7 mm or more, and even further preferably 1 mm or more. A main body 31 having a thickness not less than the lower limit provides a sufficient strength of the structure and maintains the shape or function desired for the structure against the pressure of molding sand.

The main body 31 preferably has a thickness of 7 mm or less, more preferably 6 mm or less, even more preferably 5 mm or less, further preferably 3 mm or less, and furthermore preferably 2 mm or less. A main body 31 having a thickness not more than the upper limit provides appropriate breathability, can reduce the material cost, can save the molding time, and can suppress the production cost.

For a main body 31 having varying thicknesses in the circumferential direction or the axis direction, the thickest portion of the main body 31 preferably has a thickness within the above range.

The method for determining the thickness of a main body 31 will be described later in Examples.

For a main body 31 produced by using a material slurry by a wet method, the main body 31 before use (before casting) preferably has a water content of 10% by mass or less and more preferably 8% by mass or less. The reason is that a main body having a lower water content generates a smaller amount of gas due to pyrolysis during casting. The water content is preferably maintained even after the formation of the surface layer 32. Accordingly, the structure 3 for producing a casting of the present invention preferably has a water content of 10% by mass or less and more preferably 8% by mass or less.

The main body 31 preferably has a density of 3 $g/cm^3$ or less and more preferably 2 $g/cm^3$ or less. The reason is that a main body having a smaller density has a lighter weight to facilitate handling or processing of a structure 3.

The structure 3 has the surface layer 32 as described above. The surface layer 32 preferably contains inorganic particles (hereinafter also called "second inorganic particles"), a clay mineral, and a binder (hereinafter also called a "second binder"). The second binder is the same as or different from the first binder. The surface layer 32 may be formed by applying a coating liquid composition containing the second inorganic particles, the clay mineral, and the second binder to the inner peripheral surface of the main body 31.

Hereinafter, components contained in the surface layer 32 will be described.

(vi) Second inorganic particles

Examples of the second inorganic particles include particles of an inorganic substance selected from the group consisting of a metal oxide and a metal silicate. Specifically, aggregate particles of a refractory such as mullite, zircon, mica, silica, alumina, zirconia, and graphite may be included. The second inorganic particles may include a single type or a mixture of two or more types of these aggregate particles. Of them, from the viewpoint of suppressing peeling of the surface layer from the main body, the second inorganic particles preferably contain at least one selected from mullite, zircon, silica, alumina, and zirconia, more preferably contain at least one selected from mullite, zircon, silica, and alumina, and even more preferably contain at least one selected from mullite, zircon, and silica.

From the viewpoint of improving the heat resistance during casting, the surface layer 32 preferably contains the second inorganic particles at 40% by mass or more, more preferably 60% by mass or more, and even more preferably 70% by mass or more relative to the total mass of the surface layer.

From the viewpoint of, for example, improving the strength of the surface layer 32, the surface layer 32 preferably contains the second inorganic particles at 96% by mass or less, more preferably 95% by mass or less, and even more preferably 94.5% by mass or less relative to the total mass of the surface layer.

From the viewpoint of satisfying both the improvements, the surface layer preferably contains the second inorganic particles at 40% by mass or more and 96% by mass or less, more preferably 60% by mass or more and 95% by mass or less, and even more preferably 70% by mass or more and 94.5% by mass or less.

The second inorganic particles preferably have an average particle diameter of 1 $\mu$m or more and 100 $\mu$m or less, more preferably 3 $\mu$m or more and 80 $\mu$m or less, even more preferably 5 $\mu$m or more and 50 $\mu$m or less, and further preferably 10 $\mu$m or more and 25 $\mu$m or less. When the average particle diameter is not less than the lower limit, the adhesion between the main body 31 and the surface layer 32 is achieved. When the average particle diameter is not more than the upper limit, pyrolysis gas generated from the main body 31 during casting is prevented from moving to a molten metal.

The average particle diameter of second inorganic particles may be determined in the same measurement method as for the average particle diameter of first inorganic particles.

In the structure 3, from the viewpoint of improving the pore sealing properties on the surface of the main body 31 to improve the gas shielding properties, the ratio of the average particle diameter D1 of the first inorganic particles to the average particle diameter D2 of the second inorganic particles, D1/D2, is preferably 0.1 or more, more preferably 0.3 or more, and even more preferably 0.5 or more.

From the viewpoint of preventing the second inorganic particles from getting into gaps among the first inorganic particles in the main body 31, of allowing the second inorganic particles to be arranged on the surface of the main body 31 including the first inorganic particles, and of facilitating the formation of a uniform surface layer 32 on the surface of the main body 31, the ratio D1/D2 is preferably 2.5 or less, more preferably 2 or less, and even more preferably 1.8 or less.

For a main body 31 containing two or more types of first inorganic particles, the average particle diameter of first inorganic particles contained at the highest content is "the average particle diameter D1 of the first inorganic particles". For a surface layer 32 containing two or more types of second inorganic particles, the average particle diameter of second inorganic particles contained at the highest content is "the average particle diameter D2 of the second inorganic particles".

The second inorganic particles preferably have a specific gravity of 0.5 or more and 10 or less, more preferably 1 or more and 8 or less, and even more preferably 2 or more and 6 or less. The second inorganic particles preferably have a specific gravity within the above range from the viewpoint of reducing the weight of the structure 3.

The surface layer 32 preferably contains second inorganic particles having a melting point of 1,500°C or more. Accordingly, the second inorganic particles are fire-resistant. From the viewpoint of more markedly achieving the advantage, the second inorganic particles contained in the surface layer 32 more preferably have a melting point of 1,600°C or more.

From a similar viewpoint, the surface layer 32 contains an inorganic component at 80% by mass or more, preferably 90% by mass or more, and more preferably 95% by mass or more. The upper limit is not specifically limited but may be, for example, 100% by mass.

The inorganic component contained in the surface layer 32 contains at least one element selected from aluminum and zirconium. The inorganic component contains aluminum and zirconium at 30% by mass or more, preferably 40% by mass or more, and more preferably 50% by mass or more in total in terms of oxide thereof. Accordingly, the adhesion between the main body 31 and the surface layer 32 is improved, and the adhesion between the main body and the surface layer is maintained even when a high-temperature molten metal such as molten steel is cast into the structure 3. This suppresses peeling of the surface layer to reduce inclusion defects and gas defects. The upper limit is not specifically limited but may be, for example, 95% by mass.

In the specification of the present application, the "inorganic component contained in a surface layer" means the total mass of inorganic substances including second inorganic particles.

(vii) Clay mineral

The surface layer 32 may further contain a clay mineral from the viewpoint of improving the hot strength and of imparting the viscosity for coating. By adding a clay mineral to a dispersion liquid (coating liquid composition) for forming a surface layer, the dispersion liquid has an appropriate viscosity to prevent materials from settling in the dispersion liquid and to improve the material dispersibility. Examples of the clay mineral include layered silicate minerals and multichain structure minerals, which may be natural or synthetic. Examples of the layered silicate mineral include clay minerals belonging to smectite type, kaolin type, or illite type minerals, such as bentonite, smectite, hectorite, activated clay, kibushi clay, and zeolite. Examples of the multichain structure mineral include attapulgite, sepiolite, and palygorskite. From the viewpoint of improving the hot strength and of providing the viscosity for coating, the surface layer 32 preferably contains at least one selected from attapulgite, sepiolite, bentonite, and smectite. The surface layer 32 more preferably contains at least one selected from attapulgite and sepiolite type minerals. The clay mineral, which has a layered structure or a multichain structure, mainly has, for example, a hexagonal close-packed structure and is differentiated from the second inorganic particles typically not having a layered structure or a multichain structure. In other words, the second inorganic particles do not have a layered structure or a multichain structure.

From the viewpoint of improving the hardness of the surface layer 32 and of improving the peel resistance of the surface layer 32 before casting, the surface layer 32 preferably contains the clay mineral at 0.5 parts by mass or more, more preferably 0.8 parts by mass or more, and even more preferably 1.0 part by mass or more relative to 100 parts by mass of the second inorganic particles.

From the viewpoint of improving the heat resistance during casting, the surface layer 32 preferably contains the clay mineral at 50 parts by mass or less, more preferably 25 parts by mass or less, even more preferably 10 parts by mass or less, and further preferably 5 parts by mass or less relative to 100 parts by mass of the second inorganic particles.

Provided that the ratio of the clay mineral to the second inorganic particles satisfies the above relationship, the surface layer 32 preferably contains the clay mineral at 0.5% by mass or more, more preferably 0.8% by mass or more, and even more preferably 1.0% by mass or more from the viewpoint of improving the hot strength and of providing the viscosity for coating.

From the viewpoint of improving the heat resistance during casting, the surface layer 32 preferably contains the clay mineral at 50% by mass or less, more preferably 25% by mass or less, even more preferably 10% by mass or less, further preferably 5% by mass or less, and furthermore preferably 3.5% by mass or less.

(viii) Second binder

The surface layer 32 may further contain a second binder from the viewpoint of improving the hot strength. The second binder is preferably used when the surface layer 32 is formed from the viewpoint of improving the room-temperature strength and the heat resistance of the structure for producing a casting. The second binder may be either a binder that is solid before the production of the structure 3 or may be a binder that is liquid before the production of the structure 3 but solidifies during the production of the structure 3.

As the second binder that is solid before the production of the structure 3, an organic binder and an inorganic binder may be used. Examples of the organic binder include a novolac phenol resin, a resol phenol resin, a polyethylene resin, a polypropylene resin, a polyester resin, and a polyimide resin. Examples of the inorganic binder include a sulfate, a silicate, a phosphate such as aluminum phosphate, lithium silicate, and various sols such as zirconia sol, colloidal silica, and alumina sol. The surface layer 32 may contain a single or a mixture of two or more of these organic binders. Alternatively, the surface layer 32 may contain a single or a mixture of two or more of these inorganic binders. Alternatively, the surface layer 32 may contain such an inorganic binder and an organic binder in combination. The second binder is preferably an inorganic binder from the viewpoint of improving the hot strength. Of the inorganic binders, at least one selected from the group consisting of colloidal silica and aluminum phosphate is more preferred, and colloidal silica is even more preferred.

As the second binder that is liquid before the production of the structure 3 but solidifies during the production of the structure 3, an organic binder and an inorganic binder may be used.

Examples of the organic binder include solutions of a resol phenol resin, an epoxy resin, a furan resin, a water-soluble alkyd resin, a water-soluble butyral resin, polyvinyl alcohol, a water-soluble acrylic resin, a water-soluble polysaccharide, a vinyl acetate resin, and a copolymer thereof in a solvent.

Examples of the inorganic binder include water glass such as a silicate, tetramethyl orthosilicate, and tetraethyl orthosilicate.

The surface layer 32 may contain a single or a mixture of two or more of these organic binders. Alternatively, the surface layer 32 may contain a single or a mixture of two or more of these inorganic binders. Alternatively, the surface layer 32 may contain such an inorganic binder and an organic binder in combination.

The second binder may be the same type as the above first binder but is preferably different from the first binder from the viewpoint of further improving the hot strength.

The surface layer 32 preferably contains the second binder at 1 part by mass or more, more preferably 2 parts by mass or more, and even more preferably 4 parts by mass or more relative to 100 parts by mass of the second inorganic particles. When the second binder is contained at a content not less than the lower limit, the surface layer 32 has a higher room-temperature strength and a higher hot strength.

The surface layer 32 preferably contains the second binder at 20 parts by mass or less, more preferably 16 parts by mass or less, and even more preferably 12 parts by mass or less relative to 100 parts by mass of the second inorganic particles. When the second binder is contained at a content not more than the upper limit, the surface of the surface layer 32 has higher pore sealing properties.

The surface layer 32 may have a thickness according to an intended purpose or the like. The surface layer 32 may have a constant thickness in the circumferential direction of the surface layer 32 or have varying thicknesses. The surface layer 32 may have a constant thickness in the axis direction of the surface layer 32 or have varying thicknesses. When the surface layer 32 has varying thicknesses in the circumferential direction or the axis direction, the surface layer 32 may partly have a thick portion or a thin portion.

From the viewpoint of suppressing peeling of the surface layer from the main body, the surface layer 32 preferably has a thickness of 0.05 mm or more, more preferably 0.1 mm or more, and even more preferably 0.2 mm or more. From a similar viewpoint, the surface layer 32 preferably has a thickness of 1.0 mm or less, more preferably 0.6 mm or less, and even more preferably 0.5 mm or less.

For a surface layer 32 having varying thicknesses in the circumferential direction or the axis direction, the thickest portion of the surface layer 32 preferably has a thickness within the above range.

The method for determining the thickness of a surface layer 32 will be described later in Examples.

The ratio of the thickness of the main body 31 to the thickness of the surface layer 32 (the thickness of the main body 31/the thickness of the surface layer 32) is preferably 0.5 or more and 140 or less, more preferably 1 or more and 50 or less, even more preferably 2.5 or more and 15 or less, further preferably 2.5 or more and 7.5 or less, and furthermore preferably 2.5 or more and 6 or less from the viewpoint of suppressing peeling of the surface layer from the main body.

In the structure 3, the inorganic component contained in the main body 31 and the inorganic component contained in the surface layer 32 are required to satisfy a certain relationship, specifically the relationship of Formula (1).

$$(0.375x - 7.5) < y < (0.375x + 71) \quad (1)$$

In Formula (1), x is A1/(A1 + Z1) $\times$ 100; A1 is the mass of aluminum in the inorganic component contained in the main body 31 in terms of oxide; Z1 is the mass of zirconium in the inorganic component contained in the main body 31 in terms of oxide; y is A2/(A2 + Z2) $\times$ 100; A2 is the mass of aluminum in the inorganic component contained in the surface layer 32 in terms of oxide; and Z2 is the mass of zirconium in the inorganic component contained in the surface layer 32 in terms of oxide.

In Formula (1), x is 0 or more and 100 or less. y is 0 or more and 100 or less.

The reason of focusing on the aluminum and the zirconium in the inorganic component is that oxides of these elements typically have high heat resistance.

When the inorganic component contained in the main body 31 and the inorganic component contained in the surface layer 32 satisfy the above relationship, the adhesion between the main body 31 and the surface layer 32 is improved, and the adhesion between the main body and the surface layer is maintained even when a high-temperature molten metal such as molten steel is cast into the structure 3. This suppresses peeling of the surface layer to reduce inclusion defects and gas defects. The above relational expression has been derived from many years of research and a large number of experiments by the inventors of the present invention.

From the viewpoint of further improving the adhesion between the main body and the surface layer and of further suppressing peeling of the surface layer, x in Formula (1) is preferably within a certain range. Specifically, x is more preferably 1 or more and 100 or less, even more preferably 5 or more and 100 or less, and further preferably 30 or more and 100 or less.

From the viewpoint of further improving the adhesion between the main body and the surface layer and of further suppressing peeling of the surface layer, y in Formula (1) is preferably within a certain range. Specifically, y is more preferably 5 or more and 100 or less.

Next, a method for producing the structure 3 will be described. The structure 3 may be produced, for example, as follows: a main body 31 is prepared; and then a surface layer 32 is formed on the inner surface of the prepared main body 31. Hereinafter, the method for producing a main body 31 will be described.

<Method for producing main body 31>

A main body 31 may be prepared by a molding method including a papermaking step. Such a molding method is described in, for example, JP 2012-024841 A.

Specifically, a material slurry containing organic fibers, inorganic fibers, first inorganic particles, and a first binder at a certain ratio is first prepared. The material slurry is prepared by dispersing organic fibers, inorganic fibers, first inorganic particles, and a first binder in a certain dispersion medium. The first binder may not be contained in the material slurry but may be infiltrated into a main body 31.

Examples of the dispersion medium include water and a solvent such as ethanol, methanol, dichloromethane, acetone, and xylene. These solvents may be used singly or as a mixture of two or more of them. Of them, water is preferred from the viewpoint of handleability.

To make the main body 31 have an intended formulation, the content ratio of the organic fibers, the inorganic fibers, the first inorganic particles, and the first binder in the material slurry is appropriately adjusted. From the viewpoint of improving the adhesion between the main body and the surface layer, the main body preferably contains an inorganic component, and thus first inorganic particles containing at least one element selected from aluminum and zirconium are used as the inorganic component contained in the main body. Specifically, mullite, zircon, alumina, and the like are used.

The material slurry may contain an additive such as a paper strength enhancer, a flocculant, a colorant, and an antiseptic as needed.

Next, the material slurry is used to prepare an intermediate of a main body 31 by papermaking.

In the papermaking step to form the intermediate, the material slurry is supplied into a papermaking mold including split molds and having an inner surface covered with a papermaking net, and the material slurry is deposited on the papermaking net to prepare a water-containing main body 31.

Specifically, the inner surface of split molds having communication passages from the inside to the outside is covered with a papermaking net, and the split molds are fitted together to form a molding mold. Into the molding mold having a cavity therein and having an upper opening that is open upward from the cavity, a supplying pipe is then inserted. The supplying pipe has, at the lower end, a common supply port for supplying a material slurry and a fluid from the outside of the molding mold into the cavity. The inner surface of the split molds, or the cavity formation face is covered with a papermaking net having meshes with a certain size. While the supplying pipe is inserted into the molding mold, the upper opening of the cavity is covered from above with a lid of a sealing unit. A fitting portion of the sealing unit is then fit with the upper opening. As described above, with the lid and the fitting portion of the sealing unit, the upper opening of the molding mold is closed, and the inside of the cavity is sealed.

Through the common supply port of the supplying pipe, a material slurry is next supplied into the cavity of the molding mold. Preferably, the supplying pipe is connected to a slurry supplying pipe with a three-way valve, and a certain material slurry is supplied from a supply source of the material slurry through the common supply port at the lower end of the supplying pipe into the cavity. Accordingly, gravity is applied from the upper side to the lower side, and fibers and the like contained in the material slurry are settled. The inside of the cavity is aspirated under reduced pressure through the communication passages connected to an aspiration means. As described above, by supplying a material slurry into the cavity and aspirating the inside of the cavity under reduced pressure, fibers and materials contained in the material slurry are deposited on the papermaking net overlying the cavity formation face as the inner surface of the split molds. As a result, the fibers and the materials contained in the material slurry are deposited on the papermaking net, and a water-containing main body 31 is formed.

The supply flow rate of the material slurry is preferably 10 L/min or more and more preferably 30 L/min or more from the viewpoint of quickly filling a cavity with a material slurry.

From the viewpoint of preventing fiber deposits on a papermaking net from peeling due to vortex generated in the cavity, the supply flow rate of the material slurry is preferably 80 L/min or less and more preferably 50 L/min or less.

After the formation of the water-containing main body 31, the supplying pipe is removed from the molding mold. The molding mold is then disassembled, and the water-containing main body 31 is released from the cavity formation face.

Next, the water-containing main body 31 is transferred to the cavity in a drying mold that has been formed by fitting split molds.

The water-containing main body 31 set in the cavity of the drying mold is heated to a certain temperature by a heating means of the drying mold while the upper opening of the drying mold is closed with a lid.

The temperature of the drying mold is preferably 150°C or more and more preferably 200°C or more from the viewpoint of preventing fibers from burning and of improving the drying efficiency.

The temperature of the drying mold is preferably 300°C or less and more preferably 250°C or less.

While the drying mold is heated with a heating means, a core is inserted into the cavity of the drying mold through a lid hole. A fluid is supplied into the core, and the core is expanded in the cavity. Accordingly, the main body 31 is pushed against the cavity formation face and is heated and dried to form a dried main body 31.

The dried main body 31 preferably has a water content of 15% or less and more preferably 12% or less from the viewpoint of trimming.

The pushing force by the core is preferably 0.1 MPa or more and more preferably 0.2 MPa or more from the viewpoint of the drying efficiency.

The pushing force by the core is preferably 0.6 MPa or less and more preferably 0.5 MPa or less from the viewpoint of the drying efficiency.

After the dried main body 31 is dried to a certain water content, the core is removed from the drying mold. The drying mold is then disassembled, and the dried main body 31 is released from the cavity formation face.

Next, for the released, dried main body 31, excess portions of the dried main body 31 at the respective ends in the vertical direction are cut, and a main body 31 is prepared. The prepared main body 31 has no joints by bonding and no thick wall portions by bonding.

Before transferred into the drying mold, the water-containing main body 31 may be subjected to a dehydration step. In the step, the inside of the split molds is aspirated under reduced pressure to dehydrate the water-containing main body 31 deposited on the papermaking net.

The papermaking step may be performed while split molds are placed such that the axis direction of a prepared water-containing main body 31 is the horizontal direction. Specifically, the papermaking step may be performed while the axis direction of the cavity in the molding mold is the horizontal direction.

After the formation of the main body 31 dried as above, a surface layer 32 is formed on the inner surface of the main body 31.

Specifically, one end of the main body 31 is closed with a lid, and the main body 31 is filled with a coating liquid composition on the inner peripheral surface side.

From the viewpoint of improving the adhesion between the main body and the surface layer, the surface layer preferably contains an inorganic component, and thus the coating liquid composition contains an inorganic component containing at least one element selected from aluminum and zirconium, specifically contains second inorganic particles such as mullite, zircon, and alumina particles, as the inorganic component contained in the surface layer.

For a surface layer 32 having varying thicknesses in the circumferential direction, the surface layer 32 may be formed by the following method.

The main body 31 is filled with a coating liquid composition on the inner peripheral surface side. After a certain time, the lid is removed, and the coating liquid composition is discharged except the residual liquid on the inner peripheral surface of the main body 31. The main body 31 with the residual coating liquid composition is then allowed to stand while the axis direction of the main body 31 is tilted with respect to the vertical direction, and a surface layer 32 is formed on the inner peripheral surface of the main body 31. The prepared surface layer 32 has no joints by bonding and no thick wall portions by bonding.

More specifically, one end of the main body 31 is closed with a lid, and the main body 31 is filled with a coating liquid composition on the inner peripheral surface side to wet the inner peripheral surface with the coating liquid composition. The closing of the inside of the main body 31 with the lid is then released, and the main body 31 is tilted before the coating liquid composition is dried and solidified. A coating, that is, the residual coating liquid composition on the inner peripheral surface of the main body 31 is dried and solidified while the main body 31 is tilted, and accordingly, a surface layer 32 is formed on the inner peripheral surface of the main body 31. When the main body 31 in which the coating liquid composition is not dried and solidified yet is tilted while the axis direction of the main body 31 is tilted with respect to the vertical direction, a part where a maximum thickness portion of the surface layer 32 is to be formed is preferably located downward in the vertical direction. In an embodiment in which no coating liquid composition is formed in a fitting portion, the coating liquid composition is more preferably dried and solidified while the axis direction of the main body 31 in the fitting portion is tilted at a certain angle with respect to the horizontal direction.

The coating liquid composition to be packed preferably has a temperature of 5°C or more, more preferably 15°C or more, and even more preferably 20°C or more.

The coating liquid composition to be packed preferably has a temperature of 40°C or less and more preferably 30°C or less.

An apparatus is preferably set such that the coating liquid composition has a constant temperature.

The standing time after a coating liquid composition is packed is preferably 1 second or more and 60 seconds or less from the viewpoint of productivity.

To adjust the thickness of a surface layer 32, a main body 31 coated with a coating liquid composition may be vibrated with a vibration table or the like. To firmly bond a surface layer 32 to the inner peripheral surface of a main body 31, a drying step is preferably performed. Examples of the drying method include, but are not limited to, hot-air drying with a heater, far-infrared drying, microwave drying, superheated vapor drying, and vacuum drying.

For drying with a hot-air drier, the drying temperature at the center in a drying furnace is preferably 100°C or more and more preferably 105°C or more.

From the viewpoint of reducing the effect by pyrolysis of organic substances such as organic fibers and an organic binder and of ensuring the safety against ignition, the drying temperature at the center in a drying furnace is preferably 500°C or less and more preferably 300°C or less.

As described above, the inorganic component contained in the main body 31 and the inorganic component contained in the surface layer 32 are required to satisfy the relationship of Formula (1).

For a surface layer 32 having a constant thickness in the circumferential direction, the surface layer 32 may be formed by the following method.

For a main body 31 having an open hollow portion, for example, at least a part of the opening of the hollow portion is sealed to make the hollow portion hold a coating liquid composition, and a coating liquid composition is poured such that the hollow portion is preferably filled with the coating liquid composition. The whole is preferably allowed to stand for a certain time, and then the coating liquid composition is discharged to form a surface layer 32. Also by the method, the formed surface layer 32 has no joints by bonding and no thick wall portions by bonding. In either coating method, an apparatus is most preferably set such that a coating liquid composition has a constant temperature of preferably 5°C or more and 40°C or less, more preferably 15°C or more and 30°C or less, and even more preferably 20°C or more and 30°C or less. In dip coating, specifically in the above method, the standing time is preferably 1 second or more and 60 seconds or less from the viewpoint of productivity, and the method may be performed in batches or continuously. In either method, a main body 31 coated with a coating liquid composition may be vibrated with a vibration table or the like to adjust the film thickness of a surface layer 32.

To bond second inorganic particles more firmly to the surface of a main body 31, a drying step is preferably performed. Examples of the drying method include, but are not limited to, hot-air drying with a heater, far-infrared drying, microwave drying, superheated vapor drying, and vacuum drying. When a hot-air drier is used for drying, the drying temperature at the center in a drying furnace is preferably 100°C or more and 500°C or less. From the viewpoint of reducing the effect by pyrolysis of organic substances such as organic fibers and an organic binder and of ensuring the safety against ignition, the drying temperature is most preferably 105°C or more and 300°C or less. Examples of the dispersion medium in a coating liquid composition include water and alcohols, and water is preferred. The dispersion medium is preferably used at 5 parts by mass or more and 100 parts by mass or less, more preferably 10 parts by mass or more and 80 parts by mass or less, and even more preferably 10 parts by mass or more and 20 parts by mass or less relative to 100 parts by mass of the solid contents in a coating liquid composition.

The structure for producing a casting of the present invention may be placed in molding sand or backup particles (shot balls or other particles in place of molding sand) and be used as a runner (gating system) or a flow off runner. The structure can be used to produce a casting having a fewer number of gas defects as the casting defects and is suitably used to produce a steel casting in which gas defects are easily caused.

The structure for producing a casting of the present invention is used as a mold having the above cavity or is applied to what is called full-mold casting using a styrofoam pattern, evaporative pattern casting using no binding agent, casting fields for a main mold as a mold, a core, or the like, or other fields in which heat resistance or the like is required. The structure of the present invention is suitably used for a sprue runner, a flow off runner, or a core.

<Casting production method>

The present invention further provides a casting production method in which the structure for producing a casting is used to cast a molten metal. The casting production method using the structure for producing a casting of the present invention will next be described with reference to preferred embodiments thereof. In the casting production method in the present embodiment, for example, the structure for producing a casting of the present invention produced as above is embedded in a certain position in molding sand for molding. As the molding sand, any molding sand conventionally used to produce such a casting may be used.

From a sprue, a molten metal is poured for casting. In the structure for producing a casting of the present invention, the adhesion between the main body and the surface layer is high. This suppresses the following concerns: when a high-temperature molten metal such as molten steel is cast, the surface layer is peeled; the peeled surface layer is mixed in the molten metal to cause inclusion defects; or gas comes into contact with the molten metal through a portion where the surface layer is peeled.

After casting, the whole is cooled to a certain temperature, and a molding flask is disassembled to remove the molding sand. The structure for producing a casting is removed by blasting to expose a casting. In the process, organic substances such as organic fibers and an organic binder have been pyrolyzed, and thus the structure for producing a casting is easily removed. The casting is then subjected to aftertreatment such as trimming as needed, and the production of the casting is completed.

The present invention has been described on the basis of preferred embodiments thereof, but the present invention is not limited to the above embodiments.

In consideration of the above embodiments, the present invention further discloses the following structure for producing a casting, the method for producing the structure, and the casting production method using the structure.

<1> A structure for producing a casting, the structure comprising:

a main body; and
a surface layer covering an inner surface of the main body, wherein
the main body contains organic fibers, inorganic fibers, inorganic particles, and a binder,
the main body contains an inorganic component at 45% by mass or more and 80% by mass or less,
the inorganic component contained in the main body contains at least one element selected from aluminum and zirconium, the inorganic component contains aluminum and zirconium at 25% by mass or more in total in terms of oxide thereof,
the surface layer contains an inorganic component at 80% by mass or more,
the inorganic component contained in the surface layer contains at least one element selected from aluminum and zirconium, the inorganic component contains aluminum and zirconium at 30% by mass or more in total in terms of oxide thereof, and
the inorganic component contained in the main body and the inorganic component contained in the surface layer satisfy a relationship of Formula (1):

$$(0.375x - 7.5) < y < (0.375x + 71) \quad (1)$$

(wherein, x is A1/(A1 + Z1) $\times$ 100; A1 is a mass of aluminum in the inorganic component contained in the main body in terms of oxide; Z1 is a mass of zirconium in the inorganic component contained in the main body in terms of oxide;
y is A2/(A2 + Z2) $\times$ 100; A2 is a mass of aluminum in the inorganic component contained in the surface layer in terms of oxide; and Z2 is a mass of zirconium in the inorganic component contained in the surface layer in terms of oxide).

<2> The structure for producing a casting as set forth in clause <1>, in which the main body contains the inorganic particles at 40% by mass or more and 80% by mass or less.
<3> The structure for producing a casting as set forth in clause <1> or <2>, in which the main body contains the inorganic component at 48% by mass or more and 72% by mass or less.
<4> The structure for producing a casting as set forth in any one of clauses <1> to <3>, in which the inorganic component contained in the main body contains at least one element selected from aluminum and zirconium, and the inorganic component contains aluminum and zirconium at 50% by mass or more in total in terms of oxide thereof.
<5> The structure for producing a casting as set forth in any one of clauses <1> to <4>, in which the inorganic component contained in the main body contains at least one element selected from aluminum and zirconium, and the inorganic component contains aluminum and zirconium at 63% by mass or more in total in terms of oxide thereof.
<6> The structure for producing a casting as set forth in any one of clauses <1> to <5>, in which the surface layer contains the inorganic component at 90% by mass or more.
<7> The structure for producing a casting as set forth in any one of clauses <1> to <6>, in which the inorganic component contained in the surface layer contains at least one element selected from aluminum and zirconium, and the inorganic component contains aluminum and zirconium at 40% by mass or more in total in terms of oxide thereof.
<8> The structure for producing a casting as set forth in any one of clauses <1> to <7>, in which the main body contains the organic fibers at 2% by mass or more and 30% by mass or less.
<9> The structure for producing a casting as set forth in any one of clauses <1> to <8>, in which the main body contains the organic fibers at 5% by mass or more and 20% by mass or less.
<10> The structure for producing a casting as set forth in any one of clauses <1> to <9>, in which the main body contains the inorganic fibers at 0.5% by mass or more and 40% by mass or less.
<11> The structure for producing a casting as set forth in any one of clauses <1> to <10>, in which the main body contains the inorganic fibers at 2% by mass or more and 20% by mass or less.
<12> The structure for producing a casting as set forth in any one of clauses <1> to <11>, in which the main body contains the binder at 2% by mass or more and 40% by mass or less.
<13> The structure for producing a casting as set forth in any one of clauses <1> to <12>, in which the main body contains the binder at 5% by mass or more and 30% by mass or less.

<14> The structure for producing a casting as set forth in any one of clauses <1> to <13>, in which the inorganic particles contained in the main body have an average particle diameter of 1 $\mu$m or more and 50 $\mu$m or less.

<15> The structure for producing a casting as set forth in any one of clauses <1> to <14>, in which the inorganic particles contained in the main body have a melting point of 1,200°C or more.

<16> The structure for producing a casting as set forth in any one of clauses <1> to <15>, in which the organic fibers contained in the main body contain paper fibers.

<17> The structure for producing a casting as set forth in any one of clauses <1> to <16>, in which the inorganic fibers contained in the main body contain carbon fibers.

<18> The structure for producing a casting as set forth in any one of clauses <1> to <17>, in which the mass ratio of the inorganic fibers to the organic fibers in the main body (inorganic fibers/organic fibers) is 0.1 or more and 0.8 or less when the inorganic fibers are carbon fibers.

<19> The structure for producing a casting as set forth in any one of clauses <1> to <18>, in which the inorganic particles contained in the main body contain at least one selected from mullite, zircon, hollow ceramic, alumina, and zirconia.

<20> The structure for producing a casting as set forth in any one of clauses <1> to <19>, in which the inorganic particles contained in the main body contain at least one selected from mullite, zircon, and alumina.

<21> The structure for producing a casting as set forth in any one of clauses <1> to <20>, in which the inorganic particles contained in the main body contain at least one selected from mullite and zircon.

<22> The structure for producing a casting as set forth in any one of clauses <1> to <21>, in which the binder contained in the main body contains an organic binder.

<23> The structure for producing a casting as set forth in any one of clauses <1> to <22>, in which the binder contained in the main body contains a phenol resin.

<24> The structure for producing a casting as set forth in any one of clauses <1> to <23>, in which the surface layer contains inorganic particles, a clay mineral, and a binder.

<25> The structure for producing a casting as set forth in clause <24>, in which the inorganic particles contained in the surface layer have an average particle diameter of 1 $\mu$m or more and 100 $\mu$m or less.

<26> The structure for producing a casting as set forth in clause <24> or <25>, in which the inorganic particles contained in the surface layer have a melting point of 1,500°C or more.

<27> The structure for producing a casting as set forth in any one of clauses <24> to <26>, in which the inorganic particles contained in the surface layer contain at least one selected from mullite, zircon, silica, alumina, and zirconia.

<28> The structure for producing a casting as set forth in any one of clauses <24> to <27>, in which the inorganic particles contained in the surface layer contain at least one selected from mullite, zircon, silica, and alumina.

<29> The structure for producing a casting as set forth in any one of clauses <24> to <28>, in which the inorganic particles contained in the surface layer contain at least one selected from mullite, zircon, and silica.

<30> The structure for producing a casting as set forth in any one of clauses <24> to <29>, in which the clay mineral contained in the surface layer contains at least one selected from attapulgite, sepiolite, bentonite, and smectite.

<31> The structure for producing a casting as set forth in any one of clauses <24> to <30>, in which the binder contained in the surface layer contains an inorganic binder.

<32> The structure for producing a casting as set forth in any one of clauses <1> to <31>, which is used to produce a steel casting.

<33> A method for producing a casting, comprising using the structure for producing a casting as set forth in any one of clauses <1> to <32> to cast a molten metal.

<34> The method for producing a casting as set forth in clause <33>, in which the molten metal is molten steel.

<35> A method for producing a structure for producing a casting,

the method including

supplying a material slurry into a papermaking mold including split molds and having an inner surface covered with a papermaking net, to deposit the material slurry on the papermaking net to prepare a water-containing main body,
drying the water-containing main body, and
forming a surface layer on the inner surface of the dried main body.

**In** the method for producing a structure for producing a casting,
the main body contains an inorganic component, a component containing at least one element selected from aluminum and zirconium is used as the inorganic component contained in the main body,
the surface layer contains an inorganic component, and a component containing at least one element selected from aluminum and zirconium is used as the inorganic component contained in the surface layer, and the inorganic component contained in the main body and the inorganic component contained in the surface layer satisfy a relationship of Formula (1):

$$(0.375x - 7.5) < y < (0.375x + 71) \quad (1)$$

(wherein, x is A1/(A1 + Z1) × 100; A1 is the mass of aluminum in the inorganic component contained in the main body in terms of oxide; Z1 is the mass of zirconium in the inorganic component contained in the main body in terms of oxide;

y is A2/(A2 + Z2) × 100; A2 is the mass of aluminum in the inorganic component contained in the surface layer in terms of oxide; and Z2 is the mass of zirconium in the inorganic component contained in the surface layer in terms of oxide.).

Examples

The following examples will describe the implementation of the present invention. The examples are illustrative examples of the present invention and are not intended to limit the present invention. Unless otherwise specified, "%" and "part" mean "% by mass" and "part by mass", respectively.

[Examples 1 to 14 and Comparative Examples 1 to 8]

The material slurry shown below was subjected to papermaking to prepare a fiber laminate, and the fiber laminate was dehydrated and dried to prepare a main body (straight pipe). The formulations of the main bodies are as shown in Table 1 and Table 2.

<Preparation of material slurry>

Organic fibers and inorganic fibers were dispersed at proportions shown below in water to prepare an about 1% by mass aqueous slurry (the total mass of the organic fibers and the inorganic fibers was 1% by mass in the aqueous slurry). To the slurry, first inorganic particles, a binder (a), a flocculant, and a paper strength enhancer were mixed so as to give a main body (I) in Table 1, and each material slurry was prepared. The total amount of the organic fibers, the inorganic fibers, the first inorganic particles, and the binder (a) was regarded as 100 parts (in terms of solid content), and 0.625 parts of the flocculant and 0.025 parts of the paper strength enhancer (in terms of solid content) were mixed in the slurry. The components shown in Table 1 and Table 2 are specifically as follows.

<Organic fibers>

· Organic fibers: waste newspaper [an average fiber length of 1 mm, a freeness of 150 cc]

<Inorganic fibers>

· Inorganic fibers: carbon fibers [an average fiber length of 3 mm, a fiber width of 7 μm (major axis/minor axis ratio = 429)]

<First inorganic particles>

· Mullite: a melting point of 1,850°C, a specific gravity of 2.7, an average particle diameter of 22 μm
· Zircon: a melting point of 2,430°C, a specific gravity of 4.5, an average particle diameter of 13 μm
· Silica: a melting point of 1,610°C, a specific gravity of 2.5, an average particle diameter of 23 μm

<Binder (a)>

· Phenol resin: [(resol type), a weight loss rate of 44% at 1,000°C in a nitrogen atmosphere (TG thermal analysis)]

<Flocculant>

· Flocculant: polyamide epichlorohydrin

<Paper strength enhancer>

· Paper strength enhancer: 1% aqueous carboxymethyl cellulose solution

<Dispersion medium>

· Dispersion medium: water

<Papermaking and dehydration step>

As the papermaking mold, a mold having a cavity formation face corresponding to the main body (straight pipe) was used. On the cavity formation face of the mold, a net having meshes with a certain size was placed, and a large number of through holes communicating the cavity formation face to the outside were formed. The mold included a pair of split molds. The material slurry was circulated with a pump, and a predetermined amount of the slurry was pressure-injected into the papermaking mold. Concurrently, water in the slurry was removed through the through holes, and an intended fiber laminate was deposited on the net surface. After the injection of a certain amount of the material slurry was completed, compressed air was injected into the papermaking mold to dehydrate the fiber laminate. The compressed air had a pressure of 0.2 MPa, and the time for dehydration was about 30 seconds.

<Drying step>

As the drying mold, a mold having a cavity formation face corresponding to the main body (straight pipe) was used. The mold had a large number of through holes that communicated the cavity formation face to the outside. The mold included a pair of split molds. The fiber laminate was taken out of the papermaking mold and was transferred to the drying mold heated at 200°C. From the upper opening of the drying mold, a bag-like elastic core was inserted, and compressed air (0.2 MPa) was injected into the elastic core in the sealed drying mold to expand the elastic core. The elastic core pressed the fiber laminate against the inner surface of the drying mold, and the fiber laminate was dried while the inner surface shape of the drying mold was transferred onto the surface of the fiber laminate. After heat drying (for 60 seconds), the compressed air in the elastic core was removed to deflate the elastic core, and the elastic core was taken out of the drying mold. The molded article was then taken out of the drying mold and was cooled, and a thermally cured main body was prepared.

<Preparation of coating liquid composition mainly containing second inorganic particles>

Solid content materials including 100 parts of second inorganic particles as well as a clay mineral and a binder (b) each in an amount shown in Table 1 were mixed with water, and the mixture was stirred with a stirrer for 15 minutes to give a coating liquid composition mainly containing the second inorganic particles. The components shown in Table 1 are as follows. The amount of water was such an amount as to give solid content concentrations (% by mass, denoted by "%" in Tables) in Table 1 and Table 2.

<Second inorganic particles>

· Mullite: a melting point of 1,850°C, a specific gravity of 2.7, an average particle diameter of 16 $\mu$m
· Zircon: a melting point of 2,430°C, a specific gravity of 4.5, an average particle diameter of 13 $\mu$m
· Silica: a melting point of 1,610°C, a specific gravity of 2.5, an average particle diameter of 23 $\mu$m

<Clay mineral>

· Attapulgite

<Binder (b)>

· Colloidal silica

<Formation of surface layer>

Into the thermally cured main body (straight pipe), the above-prepared coating liquid composition was poured to the upper end and then was discharged. The coating formed in this manner was dried naturally to prepare a structure for producing a casting in which a surface layer was formed.

<Measurement of thickness of surface layer, thickness of main body, and thickness of structure for producing casting after formation of surface layer>

The thickness of the surface layer formed on the surface of a main body was determined as follows: the thickness of a structure for producing a casting after formation of the surface layer and the thickness of the main body before formation of the surface layer were determined; and the difference was calculated. To determine the thickness of a main body before formation of the surface layer, the outer peripheral surface of the main body was previously marked at any 10 points; the thicknesses were determined at the points with a dial caliper gauge [manufactured by Mitutoyo Corporation, code No. 209-611, DCGO-50RL]; and the average was calculated. To determine the thickness of a structure for producing a casting after formation of the surface layer, the thicknesses were determined at points corresponding to the 10 points marked on the main body with a dial caliper gauge [manufactured by Mitutoyo Corporation, code No. 209-611, DCGO-50RL]; and the average was calculated.

<Measurement of peelability of surface layer>

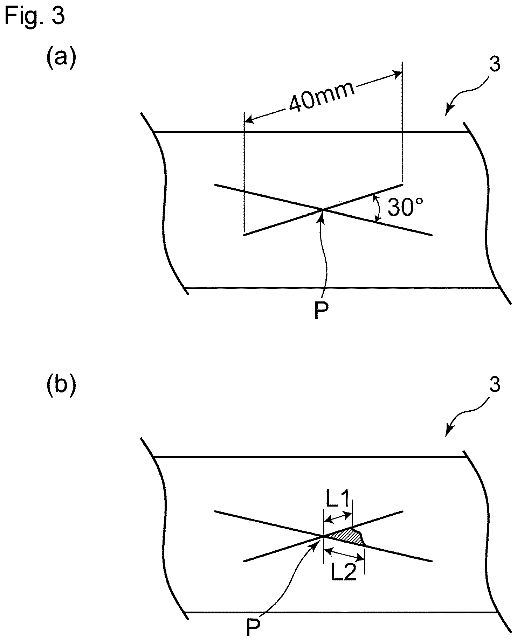

First, a structure for producing a casting after formation of the surface layer was heated in a reducing atmosphere at 1,000°C for 90 minutes and was cooled naturally. Next, a cutter knife was used to cut the surface of the structure for producing a casting, and incisions intersecting each other at 30 degrees were formed as shown in Fig. 3(a). The incisions had such a depth as to reach the main body and had a length of 40 mm. Of the four sides opposing each other across the intersection P, the length of the longest side peeled along an incision was determined. For example, when a peeled portion is over a plurality of sides as shown in Fig. 3(b), the length of the longer side L2 of the side L1 and the side L2 was determined. Table 1 and Table 2 show the result as "surface layer peeling (mm)".

<Measurement of content of inorganic component>

The content of each inorganic component in the main body and the surface layer was determined as follows: in accordance with JIS R2216, Methods for X-ray fluorescence spectrometric analysis of refractory products, the ignition loss was determined; and the content was calculated from the mass of the residue after determination. Table 1 and Table 2 show the result as "inorganic component content (%)".

<Measurement of total content of $Al_2O_3$ and $ZrO_2$ in inorganic component>

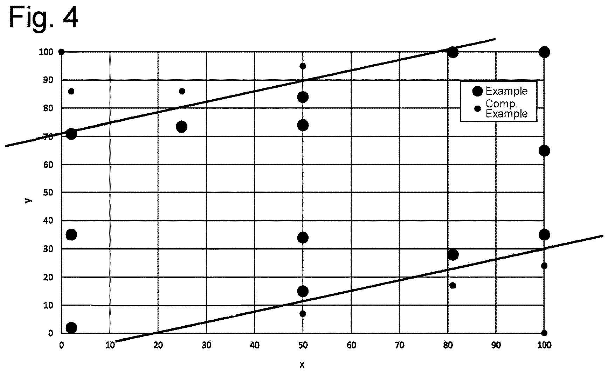

In accordance with JIS R2216, Methods for X-ray fluorescence spectrometric analysis of refractory products, the total content of Al and Zr in the inorganic component contained in each of the main body and the surface layer was calculated in terms of oxide thereof ($Al_2O_3$ and $ZrO_2$). Table 1 shows the result as "content of $Al_2O_3$ + $ZrO_2$ in inorganic component (%)". In addition, $x = A1/(A1 + Z1) \times 100$ and $y = A2/(A2 + Z2) \times 100$ were calculated, and the result in which x and y values were plotted is shown in Fig. 4.

To determine the content of the inorganic component in each of the main body and the surface layer from a structure for producing a casting, the content of the inorganic component in each of the main body and the surface layer can be determined, for example, by scraping the surface layer from a structure for producing a casting.

[Table 1] (to be continued)

| | | Main body | | | | | | | | | |
| --- | --- | --- | --- | --- | --- | --- | --- | --- | --- | --- | --- |
| | | Formulation | | | | | | | Main body thickness (mm) | Inorganic component content (%) | Content of $Al_2O_3$ + $ZrO_2$ in inorganic component (%) | X |
| | | Organic fibers (%) | Inorganic fibers (%) | First inorganic particles | | | | Binder (a) (%) | | | | |
| | | | | Type | % | Type | % | | | | | |
| Ex. | 1 | 15 | 10 | Mullite | 57 | - | - | 18 | 1.4 | 57 | 65 | 100 |
| | 2 | 15 | 3 | Mullite | 64 | - | - | 18 | 1.4 | 64 | 65 | 100 |
| | 3 | 14 | 3 | Mullite | 53 | Zircon | 13 | 17 | 1.5 | 66 | 72 | 81 |
| | 4 | 13 | 3 | Mullite | 33 | Zircon | 36 | 15 | 1.4 | 69 | 71 | 50 |
| | 5 | 13 | 3 | Mullite | 33 | Zircon | 36 | 15 | 1.5 | 69 | 71 | 50 |
| | 6 | 13 | 3 | Mullite | 33 | Zircon | 36 | 15 | 1.4 | 69 | 71 | 50 |
| | 7 | 11 | 2 | Zircon | 74 | - | - | 13 | 1.4 | 74 | 61 | 2 |
| | 8 | 11 | 2 | Zircon | 74 | - | - | 13 | 1.4 | 74 | 61 | 2 |
| | 9 | 15 | 3 | Mullite | 51 | Zircon | 13 | 18 | 1.5 | 64 | 72 | 81 |
| | 10 | 15 | 3 | Mullite | 64 | - | - | 18 | 1.5 | 64 | 65 | 100 |
| | 11 | 15 | 3 | Mullite | 64 | - | - | 18 | 1.4 | 64 | 65 | 100 |
| | 12 | 15 | 3 | Mullite | 15 | Zircon | 49 | 18 | 1.4 | 64 | 70 | 25 |
| | 13 | 15 | 3 | Mullite | 31 | Zircon | 33 | 18 | 1.4 | 64 | 70 | 50 |
| | 14 | 11 | 2 | Zircon | 74 | - | - | 13 | 1.5 | 74 | 61 | 2 |

[Table 1]

| | | Surface layer | | | | | | | | | | | | | | Structure | | Evaluation |
|---|---|---|---|---|---|---|---|---|---|---|---|---|---|---|---|---|---|---|
| | | Formulation | | | | | | | | Solid content concentration (%) | Surface layer thickness (mm) | Inorganic component content (%) | Content of $Al_2O_3$ + $ZrO_2$ in inorganic component (%) | Y | Thickness (mm) | D1/D2 | | Surface layer peeling (mm) |
| | | Second inorganic particles[*1] | | | | | | Clay mineral[*2] (%) | Binder (b)[*2] (%) | | | | | | | | | |
| | | Type | % | Type | % | Type | % | | | | | | | | | | | |
| Ex. | 1 | Mullite | 100 | - | - | - | - | 2.5 | 10 | 87 | 0.4 | 100 | 66 | 100 | 1.8 | 1.4 | | 2 |
| | 2 | Mullite | 100 | - | - | - | - | 2.5 | 10 | 87 | 0.4 | 100 | 66 | 100 | 1.8 | 1.4 | | 2 |
| | 3 | Mullite | 100 | - | - | - | - | 2.5 | 10 | 87 | 0.3 | 100 | 66 | 100 | 1.8 | 1.4 | | 3 |
| | 4 | Zircon | 28 | Mullite | 72 | - | - | 2.5 | 10 | 87 | 0.4 | 100 | 64 | 74 | 1.8 | 0.8 | | 2 |
| | 5 | Zircon | 57 | Mullite | 25 | Silica | 18 | 1.8 | 7 | 87 | 0.3 | 100 | 52 | 34 | 1.8 | 1 | | 2 |
| | 6 | Zircon | 87 | Mullite | 13 | - | - | 2.5 | 10 | 87 | 0.4 | 100 | 62 | 15 | 1.8 | 1 | | 2 |
| | 7 | Zircon | 31 | Mullite | 69 | - | - | 2.5 | 10 | 87 | 0.4 | 100 | 64 | 71 | 1.8 | 0.8 | | 4 |
| | 8 | Zircon | 100 | - | - | - | - | 1.3 | 5 | 87 | 0.4 | 100 | 64 | 2 | 1.8 | 1 | | 4 |
| | 9 | Zircon | 75 | Mullite | 25 | - | - | 2.5 | 10 | 87 | 0.3 | 100 | 62 | 28 | 1.8 | 1.7 | | 3 |
| | 10 | Zircon | 38 | Mullite | 62 | - | - | 2.5 | 10 | 87 | 0.3 | 100 | 63 | 65 | 1.8 | 1.4 | | 2 |
| | 11 | Zircon | 68 | Mullite | 32 | - | - | 2.5 | 10 | 87 | 0.4 | 100 | 63 | 35 | 1.8 | 1.7 | | 3 |
| | 12 | Zircon | 28 | Mullite | 72 | - | - | 2.5 | 10 | 87 | 0.4 | 100 | 64 | 74 | 1.8 | 0.8 | | 3 |
| | 13 | Zircon | 17 | Mullite | 83 | - | - | 2.5 | 10 | 87 | 0.4 | 100 | 64 | 84 | 1.8 | 0.8 | | 3 |
| | 14 | Zircon | 68 | Mullite | 32 | - | - | 2.5 | 10 | 87 | 0.3 | 100 | 63 | 35 | 1.8 | 1 | | 4 |

*1: The amount of mixed second inorganic particles was 100 parts.
*2: The ratio to 100 parts of second inorganic particles.

[Table 2] (to be continued)

| | | Main body | | | | | | | | | |
| | | Formulation | | | | | | Main body thickness (mm) | Inorganic component content (%) | Content of $Al_2O_3$ + $ZrO_2$ in inorganic component (%) | X |
| | | Organic fibers (%) | Inorganic fibers (%) | First inorganic particles | | | | | | | |
| | | | | Type | % | Type | % | Binder (a) (%) | | | |
| Comp. Ex. | 1 | 11 | 2 | Zircon | 74 | - | - | 13 | 1.5 | 74 | 61 | 2 |
| | 2 | 13 | 3 | Mullite | 33 | Zircon | 36 | 15 | 1.5 | 69 | 71 | 50 |
| | 3 | 13 | 3 | Mullite | 33 | Zircon | 36 | 15 | 1.4 | 69 | 71 | 50 |
| | 4 | 15 | 3 | Mullite | 64 | - | - | 18 | 1.4 | 64 | 65 | 100 |
| | 5 | 17 | 4 | Silica | 58 | - | - | 21 | 1.4 | 58 | 0 | 0 |
| | 6 | 15 | 3 | Mullite | 51 | Zircon | 13 | 18 | 1.4 | 64 | 72 | 81 |
| | 7 | 15 | 3 | Mullite | 64 | - | - | 18 | 1.5 | 64 | 65 | 100 |
| | 8 | 15 | 3 | Mullite | 15 | Zircon | 49 | 18 | 1.5 | 64 | 70 | 25 |

[Table 2]

| | | Surface layer | | | | | | | | | | | | Structure | | Evaluation |
|---|---|---|---|---|---|---|---|---|---|---|---|---|---|---|---|---|
| | | Formulation | | | | | | | Solid content concentra tion (%) | Surface layer thickness (mm) | Inorganic component content (%) | Content of $Al_2O_3 + ZrO_2$ in inorganic component (%) | Y | Thickness (mm) | D1/D2 | Surface layer peeling (mm) |
| | | Second inorganic particles*1 | | | | | Clay mineral*2 (%) | Binder (b)*2 (%) | | | | | | | | |
| | | Type | % | Type | % | Type | % | | | | | | | | | | |
| | | Type | % | Type | % | Type | % | | | | | | | | | | |
| Comp. Ex. | 1 | Zircon | 15 | Mullite | 85 | 2.5 | 10 | 87 | 0.3 | 100 | 64 | 86 | 1.8 | 1.4 | 13 | Zircon | 15 |
| | 2 | Zircon | 95 | Mullite | 5 | 2.5 | 10 | 87 | 0.3 | 100 | 61 | 7 | 1.8 | 1 | 10 | Zircon | 95 |
| | 3 | Zircon | 5 | Mullite | 95 | 2.5 | 10 | 87 | 0.4 | 100 | 65 | 95 | 1.8 | 0.8 | 11 | Zircon | 5 |
| | 4 | Silica | 100 | - | - | 2.5 | 10 | 87 | 0.4 | 100 | 0 | 0 | 1.8 | 1 | Entire area | Silica | 100 |
| | 5 | Mullite | 100 | - | - | 2.5 | 10 | 87 | 0.4 | 100 | 66 | 100 | 1.8 | 1.4 | Entire area | Mullite | 100 |
| | 6 | Zircon | 85 | Mullite | 15 | 2.5 | 10 | 87 | 0.4 | 100 | 62 | 17 | 1.8 | 1.7 | 12 | Zircon | 85 |
| | 7 | Zircon | 79 | Mullite | 21 | 2.5 | 10 | 87 | 0.3 | 100 | 62 | 24 | 1.8 | 1.7 | 10 | Zircon | 79 |
| | 8 | Zircon | 15 | Mullite | 85 | 2.5 | 10 | 87 | 0.3 | 100 | 64 | 86 | 1.8 | 0.8 | 10 | Zircon | 15 |

*1: The amount of mixed second inorganic particles was 100 parts.
*2: The ratio to 100 parts of second inorganic particles.

The results shown in Table 1, Table 2, and Fig. 4 reveal that each surface layer of the structures for producing a casting in Examples 1 to 14 was less peeled from the corresponding main body than those in Comparative Examples 1 to 8 and the adhesion was excellent. This indicates that in the structure for producing a casting of the present invention, the adhesion between the main body and the surface layer is improved. Accordingly, a casting produced by using the structure can have fewer inclusion defects and fewer gas defects. In particular, even when a high-temperature molten metal is cast, peeling of the surface layer from the main body can be suppressed.

Industrial Applicability

In the structure for producing a casting of the present invention, the adhesion between the main body and the surface layer is improved. Accordingly, a casting produced by using the structure can have fewer inclusion defects and fewer gas defects. In particular, even when a high-temperature molten metal is cast, peeling of the surface layer from the main body can be suppressed.

**Claims**

1. A structure for producing a casting, the structure comprising:

   a main body; and
   a surface layer covering an inner surface of the main body, wherein
   the main body contains organic fibers, inorganic fibers, inorganic particles, and a binder,
   the main body contains an inorganic component at 45% by mass or more and 80% by mass or less,
   the inorganic component contained in the main body contains at least one element selected from aluminum and zirconium, the inorganic component contains aluminum and zirconium at 25% by mass or more in total in terms of oxide thereof,
   the surface layer contains an inorganic component at 80% by mass or more,
   the inorganic component contained in the surface layer contains at least one element selected from aluminum and zirconium, the inorganic component contains aluminum and zirconium at 30% by mass or more in total in terms of oxide thereof, and
   the inorganic component contained in the main body and the inorganic component contained in the surface layer satisfy a relationship of Formula (1):

   $$(0.375x - 7.5) < y < (0.375x + 71) \quad (1)$$

   (wherein, x is A1/(A1 + Z1) $\times$ 100; A1 is a mass of aluminum in the inorganic component contained in the main body in terms of oxide; Z1 is a mass of zirconium in the inorganic component contained in the main body in terms of oxide;
   y is A2/(A2 + Z2) $\times$ 100; A2 is a mass of aluminum in the inorganic component contained in the surface layer in terms of oxide; and Z2 is a mass of zirconium in the inorganic component contained in the surface layer in terms of oxide).

2. The structure for producing a casting according to claim 1, wherein the main body contains the organic fibers at 2% by mass or more and 30% by mass or less.

3. The structure for producing a casting according to claim 1 or 2, wherein the main body contains the inorganic fibers at 0.5% by mass or more and 40% by mass or less.

4. The structure for producing a casting according to any one of claims 1 to 3, wherein the main body contains the binder at 2% by mass or more and 40% by mass or less.

5. The structure for producing a casting according to any one of claims 1 to 4, wherein the inorganic particles contained in the main body have an average particle diameter of 1 $\mu$m or more and 50 $\mu$m or less.

6. The structure for producing a casting according to any one of claims 1 to 5, wherein the main body contains the inorganic particles having a melting point of 1,200°C or more.

7. The structure for producing a casting according to any one of claims 1 to 6, wherein the surface layer contains inorganic particles, a clay mineral, and a binder.

8. The structure for producing a casting according to claim 7, wherein the inorganic particles contained in the surface layer have an average particle diameter of 1 μm or more and 100 μm or less.

9. The structure for producing a casting according to claim 7 or 8, wherein the surface layer contains the inorganic particles having a melting point of 1,500°C or more.

10. The structure for producing a casting according to any one of claims 1 to 9, wherein the structure is used to produce a steel casting.

11. A method for producing a casting, comprising using the structure for producing a casting according to any one of claims 1 to 9, to cast a molten metal.

12. The method for producing a casting according to claim 11, wherein the molten metal is molten steel.

13. A method for producing a structure for producing a casting,

the method comprising:

supplying a material slurry into a papermaking mold including a split mold and having an inner surface covered with a papermaking net, to deposit the material slurry on the papermaking net to prepare a water-containing main body;
drying the water-containing main body; and
forming a surface layer on an inner surface of the dried main body, wherein

the main body contains an inorganic component, a component containing at least one element selected from aluminum and zirconium is used as the inorganic component contained in the main body,
the surface layer contains an inorganic component, a component containing at least one element selected from aluminum and zirconium is used as the inorganic component contained in the surface layer, and
the inorganic component contained in the main body and the inorganic component contained in the surface layer satisfy a relationship of Formula (1):

$$(0.375x - 7.5) < y < (0.375x + 71) \quad (1)$$

(wherein, x is A1/(A1 + Z1) × 100; A1 is a mass of aluminum in the inorganic component contained in the main body in terms of oxide; Z1 is a mass of zirconium in the inorganic component contained in the main body in terms of oxide;
y is A2/(A2 + Z2) × 100; A2 is a mass of aluminum in the inorganic component contained in the surface layer in terms of oxide; and Z2 is a mass of zirconium in the inorganic component contained in the surface layer in terms of oxide.).

Fig. 1

Fig. 2

(a)

(b)

(c)

(d)

Fig. 3

(a)

(b)

# Fig. 4

# INTERNATIONAL SEARCH REPORT

| International application No. |
|---|
| **PCT/JP2023/017720** |

## A. CLASSIFICATION OF SUBJECT MATTER

**B22C 1/00**(2006.01)i; **B22C 9/02**(2006.01)i
FI:   B22C1/00 A; B22C1/00 K; B22C9/02 103Z

According to International Patent Classification (IPC) or to both national classification and IPC

## B. FIELDS SEARCHED

Minimum documentation searched (classification system followed by classification symbols)

B22C1/00; B22C9/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | JP 2007-21578 A (KAO CORP.) 01 February 2007 (2007-02-01) paragraphs [0043]-[0089], tables 1, 2 | 13 |
| Y | | 13 |
| A | | 1-12 |
| Y | JP 10-72341 A (TEIKA SEIYAKU KK) 17 March 1998 (1998-03-17) paragraph [0005] | 13 |
| A | CN 107116182 A (NINGXIA KOCEL ENERGY CO., LTD.) 01 September 2017 (2017-09-01) entire text | 1-13 |
| A | JP 47-13176 B1 (AIKOH CO., LTD.) 21 April 1972 (1972-04-21) entire text, all drawings | 1-13 |

☐ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 May 2023** | **13 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2023/017720** |

| Patent document cited in search report | | | Publication date (day/month/year) | Patent family member(s) | Publication date (day/month/year) |
| --- | --- | --- | --- | --- | --- |
| JP | 2007-21578 | A | 01 February 2007 | (Family: none) | |
| JP | 10-72341 | A | 17 March 1998 | (Family: none) | |
| CN | 107116182 | A | 01 September 2017 | (Family: none) | |
| JP | 47-13176 | B1 | 21 April 1972 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130105103 A1
- JP 2012024841 A